# EUROPÄISCHE PATENTANMELDUNG

(11) **EP 0 842 977 A2**
(43) Veröffentlichungstag der Anmeldung: **20.05.1998**
(21) Anmeldenummer: 97250340.3
(22) Anmeldetag: 13.11.1997
(51) Int. Cl.: C08L 3/00, C08K 3/04

(54) **Zusammensetzung und Verfahren zur Herstellung einer thermoplastisch formbaren Masse**

(30) Priorität: 13.11.1996 DE 19648616
(71) Anmelder: IGV - Institut für Getreideverarbeitung GmbH, 14558 Bergholz-Rehbrücke (DE)
(72) Erfinder: Rothe, Thomas, 14558 Bergholz-Rehbrücke (DE)
(74) Vertreter: Gulde, Klaus W., Dipl.-Chem.

(57) **Zusammenfassung**

Die Erfindung betrifft eine Zusammensetzung und ein Verfahren zur Herstellung einer formbaren Masse bestehend aus stärkehaltigen Naturprodukten.
Der Erfindung liegt die Aufgabe zugrunde, eine Zusammensetzung und ein Verfahren zur Herstellung formbarer Massen anzubieten, die thermoplastische Eigenschaften aufweisen und bei denen der Nachteil des Entstehens von Maillard- und Karamelisierungsreaktionsprodukten und die Schwindungsneigung der aus diesen Massen herstellbaren Formteilen stark eingeschränkt beziehungsweise beseitigt.

Erfindungsgemäß wird die Aufgabe dadurch gelöst, daß müllereitechnisch fraktionierte Getreidemehle durch kompakte Verkleisterung in einem Extruder, wie z.B. in einer Kolben- oder Schneckenpresse, im Bereich der Verkleisterungstemperatur zu Granulaten verarbeitet werden. Das erfindungsgemäße Entfernen des dabei erforderlichen Prozeßwassers nach der Granulierung bis auf den inter- und intramolekular gebundenen Anteil ist Voraussetzung für die Erzielung thermoplastischer Eigenschaften.

## Beschreibung

Die Erfindung betrifft eine Zusammensetzung und ein Verfahren zur Herstellung einer thermoplastisch formbaren Masse gemäß den Oberbegriffen der Patentansprüche 1, 2, 4 und 19.

Die Gewinnung von Werkstoffen, die sich unkompliziert biologisch abbauen lassen und die aus nachwachsenden Rohstoffen herstellbar sind, haben zunehmend an Bedeutung gewonnen. Es hat sich gezeigt, daß bei der Herstellung solcher Materialien der Stärke eine besondere Bedeutung zukommt.

Stärke ist ein sogenanntes Reservekohlenhydrat, das von vielen Pflanzen oft in beträchtlichen Mengen in Form von Stärkekörnern gespeichert wird, so zum Beispiel in den Kartoffeln, in Getreide und auch in Hülsenfrüchten.

Es sind verschiedene formbare Materialien bekannt geworden, in denen die Stärke als funktionelle Komponente fungiert, wobei sie bei verschiedener pflanzlicher Herkunft in der Regel als reiner isolierter Stoff verwendet wird. Sie dient hierbei sowohl als chemischer Reaktionspartner wie auch als Bestandteil in sogenannten Compounds.
Allerdings werden auch Materialien beschrieben, bei deren Herstellung stärkehaltige Rohstoffe aus zerkleinerten Naturprodukten verwendet werden. In der Regel werden die stärkehaltigen Ausgangsstoffe mit geeigneten Zusätzen und bei erhöhten Temperaturen in einem Extruder zu formbaren Massen verarbeitet. Eine gewisse Rolle spielt hierbei auch der Wassergehalt der Ausgangsmischung. Die auf diese Weise hergestellten, formbaren Massen können dann mit den an sich bekannten Verformungsverfahren der Kunststofftechnik, wie zum Beispiel mit der Spritzgußtechnologie, zur Herstellung geformter Gebrauchsgegenstände eingesetzt werden.

In der EP 0474095 B1 wird eine Zusammensetzung für das Formen biologisch abbaubarer Gebrauchsgegenstände und Verfahren zur Herstellung derselben beschrieben. Diese Zusammensetzung enthält Stärke in Form zerkleinerter Naturprodukte, die zu Mehl oder Grieß vermahlen sind und gegebenenfalls noch weitere getrocknete Zerealien, Früchte oder Feldfrüchte in Kombination mit den anderen Bestandteilen dieser Naturprodukte wie Spetzen, Kleie und Schale, die neben cellulosehaltigen Teilen auch Öle und/ oder Proteine enthalten.
Eine derartige Zusammensetzung der Ausgangsstoffe für die Herstellung eines thermoplastisch formbaren Materials weist verschiedene Nachteile auf.
Diese hier angegebene Zusammensetzung enthält eine Reihe von Substanzen, die die Karamelisierung und die Maillardreaktion bei der Weiterverarbeitung der thermoplastisch formbaren Produkte begünstigen. Dazu sind insbesondere bestimmte Proteine, freie Amine und auch Zucker zu rechnen, die in der nichtisolierten, nicht-modifizierten, rohen und ungereinigten Form, gemäß der EP 0474095 B1, vorliegenden Stärke in relativ hohen Konzentrationen enthalten sind.
Unter den hier angegebenen Verarbeitungsbedingungen, nämlich oberhalb von 80-200°C, können diese Reaktionen bereits ablaufen.

Im zweiten hier angegebenen Temperaturbereich unterhalb der sogenannten Glastemperatur sind diese Reaktionen kaum zu beobachten. Allerdings entstehen hier auch keine Materialien mit thermoplastischen Eigenschaften.

Als Folge der Karamelisierungs- und Maillardreaktionen entstehen braungefärbte und hochmolekulare Produkte, die Verursacher von Ablagerungen in den Spritzgußsmaschinen sind sowie eine starke Adhäsion der Formteile im Spritzgußwerkzeug hervorrufen können. Werden die natürlichen Stärketräger in ihrer komplexen Form als Rohstoff zugrundegelegt, so werden bei einem derartigen Gemisch bei thermischen Prozessen, insbesondere diese Reaktionsprodukte gebildet, die sehr ungünstige Auswirkungen auf die technische Realisierung der Spritzgußprozesse haben.

Hinzu kommt, daß die durch die Anwesenheit der Karamelisierungs- und Maillardreaktionsprodukte hervorgerufene starke Bräunung der spritzgußhergestellten, geformten Gebrauchsgegenstände, wie zum Beispiel Geschirr, unerwünscht beziehungsweise störend ist insbesondere hinsichtlich einer anderen Farbgebung oder einer geforderten Transparenz.

Weiterhin beeinträchtigt ein hoher Anteil an Schalenbestandteilen oder hohe Gehalte an Cellulose die Fließfähigkeit und die Verformbarkeit.

Auch die verschiedentlich beschriebene Verwendung reiner Stärkematerialien zur Herstellung formbarer Massen, die die störenden Bestandteile nicht enthalten, führt bei der Weiterverarbeitung in Spritzgußanlagen zu Formkörpern, die eine nicht zu vernachlässigende Schwindungsneigung der denaturierten Stärke in der Erkaltungsphase aufweisen, so daß viel Ausschuß an nicht nutzbaren Formteilen entstehen kann.

Der Erfindung liegt nun die Aufgabe zugrunde, eine Zusammensetzung und ein Verfahren zur Herstellung formbarer Massen anzubieten, die thermoplastische Eigenschaften aufweisen und bei denen der Nachteil des Entstehens von Maillard- und Karamelisierungsreaktionsprodukten und die Schwindungsneigung der aus diesen Massen herstellbaren Formteilen stark eingeschränkt beziehungsweise beseitigt wird.

Erfindungsgemäß wird die Aufgabe der Erzielung vorteilhafter thermoplastischer Eigenschaften von Materialien auf Stärkebasis mit spritzgußfähigen Eigenschaften und Formteilen daraus dadurch gelöst, daß müllereitechnisch fraktionierte Produkte wie Getreidemehle durch kompakte Verkleisterung in einem Extruder, im Bereich der Verkleisterungstemperatur, zu Granulaten verarbeitet werden. Das erfindungsgemäße Entfernen des dabei erforderlichen Prozeßwassers nach der Granulierung bis auf den inter- und intramolekular gebundenen Anteil ist Voraussetzung für die Erzielung thermoplastischer Eigenschaften.

Die Verwendung fraktionierter Getreidemehle, insbesondere Roggenmehle, weist dabei den entscheidenden Vorteil auf, daß auf müllereitechnischem Weg die Zusammensetzung des Stärkeproduktes Mehl so optimiert wird, daß daraus die aufgrund des erfindungsgemäßen Verfahrens gewonnenen Granulate problemlos in Kunststoff-Spritzgußprozessen aufgeschmolzen und in entsprechende Formen gespritzt werden können.

Durch die Verwendung müllereitechnisch fraktionierter Mehle wird eine Verminderung der reaktiven Bestandteile, die die Karamelisierungs- bzw. Maillardreaktion begünstigen, aus den Kornrandschichten im Gesamtmehl bei gleichzeitiger Beibehaltung eines Stärkegehaltes von nicht mehr als 80% und nicht weniger als 70% erzielt. Dies entspricht nach der technologischen Vorgehensweise der heute allgemein üblichen Getreidevermahlung mit einem Ausmahlungsgrad von 50% bis 80%.

Die erfindungsgemäße Einbindung von Graphit in die bei der hydrothermischen Konversion gebildete Matrix dient der Erhöhung der Fließfähigkeit des Materials bei seiner späteren Verarbeitung in der thermoplastischen 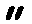 Schmelze". Das nach der Trocknung eines Granulates in einen feuchtestabilen Zustand verbleibende Restwasser reicht bei den meisten Spritzguß-Verarbeitungsbedingungen nicht aus, um eine ausreichende Fließfähigkeit der Schmelze zu erreichen.
Graphit dient hierbei als Gleitmittel, das in der Matrix der thermoplastischen Masse homogen eingebettet ist. Gleichzeitig kann es als Farbpigment dienen.

Die erfindungsgemäße Einbindung synthetischer Polymere in die nach dem beschriebenen Verfahren der kompakten Verkleisterung/Gelatinierung gebildeten Matrix aus Biopolymeren (Stärke) kann dadurch erfolgen, daß die synthetischen Polymere als wäßrige Polymerdispersion eingearbeitet werden. Ihr Wasseranteil dient gleichzeitig als Prozeßwasser für die kompakte Verkleisterung.
Die so erhaltene Polymermischung zeichnet sich gegenüber dem reinen Biopolymer durch eine erhöhte Feuchtebeständigkeit und ein verbessertes Fließverhalten bei der Spritzgußverarbeitung aus.

Verfahrenstechnisch wurde die Aufgabe der Gewinnung eines thermoplastischen Zwischenproduktes dadurch gelöst, daß ein stärkehaltiges, müllereitechnisch fraktioniertes Produkt gegebenenfalls mit Zusätzen unter Verwendung von 20 bis 30 Teilen Wasser und bei einer Temperatur im Verkleisterungsbereich der jeweiligen Stärkeart kompakt verkleistert wird. Diese Temperatur liegt je nach Stärkeart zwischen 60°C und 80°C. Im Anschluß an diesen hydrothermischen Prozeß, der die Strukturveränderung der Stärke bewirkt, wird aus der Entstehung des Granulats das Prozeßwasser durch intensive Trocknung entfernt, so daß lediglich das inter- und intramolekular in der Stärkematrix gebundene Wasser in einem Anteil von 7% bis 10% verbleibt.
Durch die sogenannte kompakte Verkleisterung und sofortigen Trocknung wird die erfindungsgemäße Zusammensetzung sofort in den thermoplastischen Zustand überführt.
Die an sich bekannte teigige oder gummiartige Konsistenz gelatinierter Stärkemassen im Moment ihrer Herstellung wird unrichtigerweise häufig als thermoplastisch bezeichnet. Kunststoffe weisen jedoch dann thermoplastische Eigenschaften auf, wenn die formende Verarbeitung beispielsweise eines Granulates ausschließlich nach einem thermischen Schmelzprozeß möglich ist. Genau das wird mit der Erfindung vorteilhafterweise erreicht.

Die kompakte Verkleisterung kann technisch dabei auf verschiedenen Wegen erfolgen, muß aber in jedem Fall unter Einwirkung von hohem Druck stattfinden. Dies kann beispielsweise mit Hilfe von Kolben- oder Schneckenpressen realisiert werden, mit denen es möglich ist, die entstehende, gummiartige Masse durch Matrizen zu pressen und anschließend zu granulieren und zu trocknen.

Das getrocknete Granulat weist dann überraschend thermoplastische Eigenschaften auf.

Die Verarbeitung des getrockneten Granulates kann mit herkömmlichen Spritzgußmaschinen erfolgen, wobei Plastiziertemperaturen von 120°C bis 170°C einzuhalten sind. Die dabei erforderlichen Spritzdrücke betragen in Abhängigkeit von der Formteilgeometrie und den verwendeten Fließhilfsmitteln 500 bar bis 2000 bar.

Zur Erzielung bestimmter weiterer vorteilhafter Werkstoffeigenschaften der Formteile kann es erforderlich sein, Zusatzstoffe vor oder nach der kompakten Verkleisterung der Zusammensetzung beizufügen. Dies können u. a. sowohl elastizitätserhöhende wie auch Stoffe mit hydrophobierender Wirkung oder Farbstoffe sein, wie sie allgemein bei derartigen Werkstoffen eingesetzt werden, aber auch füllstoffartige Naturprodukte oder reine Stärke.

### Beispiel 1:

- 100 Teile: Roggenmehl mit einem Ausmahlungsgrad von 52% und einem Stärkegehalt von 80%
werden mit Wasser auf einen Feuchtegehalt von 26% eingestellt und in einer Schneckenpresse bei 75°C und einem Druck von 120 bar kompakt verkleistert und granuliert. Die Granulate mit einem Durchmesser von 2 mm - 5 mm werden danach bei 65°C auf einen Restfeuchtegehalt von 10% getrocknet.

Die thermoplastische Weiterverarbeitung des Granulates erfolgt im Spritzgußverfahren, wobei eine Plastifiziertemperatur von 170°C einzuhalten ist. Die Plastifizierung hat dabei unter kurzer intensiver mechanischer Scherung zu erfolgen.

### Beispiel 2:

- 90 Teile: Roggenmehl mit einem Ausmahlungsgrad von 85% und
- 5 Teile: Ethylenglykol
- 5 Teile: Glycerol (99,5%-ig)
werden homogen vermischt, mit Wasser auf einen Feuchtegehalt von 24% eingestellt und anschließend in einer Schneckenpresse bei 75°C und einem Druck von 150 bar kompakt verkleistert und granuliert.
Die Granulate mit einem Durchmesser von 2 mm - 5 mm werden danach bei 65°C auf einen Restfeuchtegehalt von 8% getrocknet.

### Beispiel 3:

- 77 Teile: Roggenmehl mit einem Ausmahlungsgrad von 40%
- 15 Teile: Polyvinylalkohol einer Viskosität von 28 Pa*s und einer Verseifungszahl von 20 mg KOH/g
- 8 Teile: Glycerol, (99,5%-ig)
werden homogen gemischt und mit Wasser auf einen Feuchtegehalt von 26% eingestellt und anschließend in einer Schneckenpresse bei 78°C und einem Druck von 190 bar kompakt verkleistert und granuliert.
Die Granulate mit einem Durchmesser von 4 mm werden sofort einem intensiven Trocknungsprozeß bei 70°C unterworfen, bei dem das Prozeßwasser entfernt und ein Restfeuchtegehalt (gebundenes Wasser) von 8% eingestellt wird.

### Beispiel 4:

- 85 Teile: Roggenmehl mit einem Ausmahlungsgrad von 55%-
- 8 Teile: Glycerol, (99,5%-ig)
- 5 Teile: Polyvinylalkohol einer Viskosität von 28 Pa*s und einer Verseifungszahl von 20 mg KOH/g
- 2 Teile: Magnesiumstearat
werden homogen gemischt und mit Wasser auf einen Feuchtegehalt von 26% eingestellt und anschließend in einer Schneckenpresse bei 75°C und einem Druck von 140 bar kompakt verkleistert und granuliert.
Die Granulate werden sofort einem intensiven Trocknungsprozeß bei 70°C unterworfen, bei dem das Prozeßwasser entfernt und ein Restfeuchtegehalt von 7% eingestellt.

### Beispiel 5:

- 85 Teile: Roggenmehl mit einem Ausmahlungsgrad von 75%
- 15 Teile: Harnstoff
werden homogen gemischt und mit Wasser auf einen Feuchtegehalt von 16% eingestellt und anschließend bei 78°C kompakt verkleistert und granuliert.
Anschließende Rücktrocknung der Granulate bis auf 8%. Die Spritzgußverarbeitung erfolgt bei einer Plastifizierungstemperatur von 130°C.

### Beispiel 6:

- 77 Teile: Roggenmehl mit einem Ausmahlungsgrad von 85%
- 10 Teile: Polyvinylalkohol einer Viskosität von 4,5 Pa*s und einer Verseifungszahl von 290 mg KOH/g
- 8 Teile: Glycerol, (99,5%-ig)
- 5 Teile: Harnstoff
werden homogen gemischt und mit Wasser auf einen Feuchtegehalt von 22% eingestellt und anschließend bei 70°C und einem Druck von 150 bar kompakt verkleistert und granuliert.

Die Granulate werden sofort einem intensiven Trocknungsprozeß bei 70°C unterworfen, bei dem das Prozeßwasser entfernt und ein Restfeuchtegehalt von 10% eingestellt wird.
Die Spritzgußverarbeitung erfolgt bei einer Plastifiziertemperatur von 150°C vorzugsweise mit Heißkanalsystemen im Einspritzbereich der Formwerkzeuge.

### Beispiel 7

- 59 Teile: Roggenmehl mit einem Ausmahlungsgrad von 55%-
- 24 Teile: dispersem Polyvinylacetat mit einem Feststoffgehalt von 50% und einer Brookfield-Viskosität von 30Pa*s (ISO 2555)
- 11 Teile: Polyvinylalkohol einer Höppler-Viskosität (4%ige Lösung) von 28 Pa*s und einer Verseifungszahl von 20 mg KOH/g
- 6 Teile: Glycerol, (99,5%-ig)
werden in einer Schneckenpresse bei 85°C und 120 bar der hydrothermischen Konversion unterzogen und granuliert.

Die Granulate mit einem Durchmesser von 4 mm werden sofort einem intensiven Trocknungsprozeß bei 70°C unterworfen, bei dem das Prozeßwasser entfernt und ein Restfeuchtegehalt von 8% bis 10% eingestellt wird.
Der Werkstoff bzw. die Formteile, die entsprechend der o.g. Rezeptur hergestellt wurden, weisen den Vorteil auf, daß sie eine deutlich geringere Wasserempfindlichkeit besitzen. Gleichzeitig wirkt das homogen in der Stärkematrix integrierte synthetische Polymer als Gleitmittel bei der Spritzgußverarbeitung.

### Beispiel 8

- 70 Teile: Roggenmehl mit einem Ausmahlungsgrad von 80%
- 12 Teile: Graphit, pulverförmig
- 18 Teile: Wasser
werden homogen gemischt in einer Schneckenpresse bei 85°C und 150 bar der hydrothermischen Konversion unterzogen und granuliert. Die Granulate werden bis auf einen Restfeuchtegehalt von 8% bis 10% getrocknet und sind in diesem Zustand spritzgußfähig. Neben der Verwendung als Fließmittel bewirkt die Verteilung der feinsten Graphit-Teilchen eine homogene Färbung des Werkstoffes. Eine eventuell bei der Spritzgußverarbeitung auftretende Braunfärbung durch Reaktionen der Inhaltsstoffe wird hierdurch vollständig überdeckt. Die hergestellten Formteile besitzen hart bis spröde Eigenschaften, unterliegen einem raschen biologischen Abbau und sind feuchteunbeständig.

## Patentansprüche

1. Zusammensetzung zur Herstellung einer thermoplastisch formbaren Masse, bestehend aus stärkehaltigen Naturprodukten sowie Wasser und weiteren Zusätzen,
gekennzeichnet dadurch,
daß die Zusammensetzung ein stärkehaltiges müllereitechnisch fraktioniertes Produkt enthält.

2. Zusammensetzung zur Herstellung einer thermoplastisch formbaren Masse, bestehend aus stärkehaltigen Naturprodukten sowie Wasser (und weiteren Zusätzen),
dadurch gekennzeichnet,
daß die Zusammensetzung gemäß Anspruch 1 Graphit enthält.

3. Zusammensetzung nach Anspruch 2,
dadurch gekennzeichnet,
daß 3 - 35% Graphit enthalten sind.

4. Zusammensetzung zur Herstellung einer thermoplastisch formbaren Masse, bestehend aus stärkehaltigen Naturprodukten sowie Wasser und weiteren Zusätzen,
gekennzeichnet dadurch,
daß die Zusammensetzung gemäß Anspruch 1 mindestens eine wäßrige Polymerdispersion enthält.

5. Zusammensetzung nach Anspruch 4,
dadurch gekennzeichnet,
daß wäßrige Polymerdispersionen wie Polyvinylpropionat-, Polyvinylacetat-,Polyethylen- und/ oder Polyacrylsäureester-Dispersionen enthalten sind.

6. Zusammensetzung nach Anspruch 4 oder 5,
dadurch gekennzeichnet,
daß 5 - 50% einer wäßrigen Polymerdispersion enthalten ist, die einen Polymergehalt von 50 - 65% aufweist, wobei gegebenenfalls zusätzlich die Dispersion stabilisierende Mittel wie Cellulosederivate, Polyvinylalkohol und/oder Tenside enthalten sind.

7. Zusammensetzung nach einem der Ansprüche 1 bis 6,
gekennzeichnet dadurch,
daß das stärkehaltige müllereitechnisch fraktionierte Produkt ein fraktioniertes Mehl, insbesondere mit einen Ausmahlungsgrad von 10 bis 90% vorwiegend mit einem Ausmahlungsgrad von 40 bis 80% vorrangig insbesondere mit einen Ausmahlungsgrad von 50 bis 60% ist.

8. Zusammensetzung nach einem der Ansprüche 1 bis 7
gekennzeichnet dadurch,
daß das stärkehaltige müllereitechnisch fraktionierte Produkt mit niedrigem Ausmahlungsgrad als Zusatz füllstoffartige Naturprodukte wie cellulosehaltige, ölhaltige, proteinhaltige Naturprodukte und/oder Getreidekornrandschichten enthält.

9. Zusammensetzung nach einem der Ansprüche 1 bis 7,
gekennzeichnet dadurch,
daß das stärkehaltige, müllereitechnisch fraktionierte Produkt mit hohem Ausmahlungsgrad als Zusatz reine und/oder modifizierte Stärke enthält.

10. Zusammensetzung nach einem der Ansprüche 1 bis 9,
gekennzeichnet dadurch,
daß an sich bekannte Zusätze wie mehrwertige Alkohole Stearate, Harnstoff und Polyvinylalkohol als Fließhilfsmittel, Weichmacher und Hydrophobierungsmittel enthalten sind.

11. Zusammensetzung nach einem der Ansprüche 1 bis 10,
gekennzeichnet dadurch,
daß das müllereitechnisch fraktionierte Produkt, Getreidemehl wie Roggenmehl, Mehl von Leguminosen und/oder von Kartoffeln sowie weiterer Stärke enthaltender Naturprodukte ist.

12. Verfahren zur Herstellung von thermoplastisch formbaren Massen, bestehend aus stärkehaltigen Naturprodukten,
gekennzeichnet dadurch,
daß eine Zusammensetzung gemäß der Ansprüche 1, 2 oder 4 bei Anwesenheit von Wasser, einer Temperatur zwischen 55 und 100°C und bei einem hohem Druck kompakt verkleistert und die entstehende Masse getrocknet wird.

13. Verfahren nach Anspruch 12,
gekennzeichnet dadurch,
daß die kompakte Verkleisterung bei einem Wassergehalt von 15 bis 40%, insbesondere von 20 bis 30% durchgeführt wird.

14. Verfahren nach Anspruch 12 oder 13,
gekennzeichnet dadurch,
daß die Masse vor dem Trocknen zu Granulaten verarbeitet wird, wobei die Trocknung des Granulates zwischen 20 und 80°C bis zum Erreichen eines Wassergehaltes von 5-12% erfolgt.

15. Verfahren nach einem der Ansprüche 12 bis 14,
gekennzeichnet dadurch,
daß die kompakte Verkleisterung der Zusammensetzung im Temperaturbereich des Gelatinierungspunktes erfolgt.

16. Spritzgußhergestellte Formkörper, bestehend aus einer durch kompakte Verkleisterung gemäß des Anspruches 19 erzeugte thermoplastische formbare Masse.

17. Thermoplastisch formbare Masse, hergestellt durch kompakte Verkleisterung aus den Zusammensetzungen gemäß der Ansprüche 1, 2 und 4 bei Anwesenheit von Wasser, bei einer Temperatur zwischen 55 und 100°C, bei einem hohen Druck und anschließender Trocknung der entstandenen Masse.
